# EUROPEAN PATENT APPLICATION

(11) **EP 3 264 372 A1**
(43) Date of publication of application: **03.01.2018**
(21) Application number: 16305805.0
(22) Date of filing: 30.06.2016
(51) Int. Cl.: G06T 19/00, G06T 15/20, G06T 15/30

(54) **IMAGE PROCESSING DEVICE AND METHOD**

(71) Applicant: ALCATEL LUCENT, 92100 Boulogne-Billancourt (FR)
(72) Inventor: Tytgat, Donny, 2018 Antwerpen (BE); Macq, Jean-François, 2018 Antwerpen (BE)
(74) Representative: D'Halleweyn, Nele Veerle Trees Gertrudis

(57) **Abstract**

An image processing device comprising: a camera capturing an image feed of a scene ; a sensor obtaining sensor data, representative for an orientation of the image processing device; a first estimating unit estimating a position and direction of the camera at a first moment in time, based on a first captured image of the scene ; a renderer rendering a virtual object at a second moment in time; a second estimating unit estimating a position and direction of the camera at the second moment in time, based on the estimated position and direction of the camera at the first moment in time and sensor data obtained at the first and second moments, wherein the renderer renders the virtual object based on the estimated position and direction of the camera at the second moment in time; and a display displaying the rendered virtual object in registration with the image feed.

## Description

### Field of Invention

The field of the invention relates to image processing and more in particular to augmented reality and/or virtual reality applications. Particular embodiments relate to an image processing device adapted for being carried by a user and an image processing method for rendering a virtual object in registration with an image feed.

### Background

Image processing devices to provide a user with a Virtual Reality (VR) and/or Augmented Reality (AR) experience are known in the art. Such devices are often provided with a head-mounted display (HMD) and have sensors embedded within that allow for a viewpoint of a rendered scene to be changed according to the actual, physical movement of the device. As such, a user can look around in a virtual environment or real environment augmented with virtual objects by moving his or her head, and thereby effectively moving the virtual camera.

A known problem that occurs in VR devices, especially in HMDs is that there exists a delay between the start of rendering when the virtual viewpoint is derived based on input of the sensors, and the completion of rendering. During the delay, the VR device might have changed position and/or orientation which results in a rendered image which does not correspond with the actual position/and or orientation of the VR device.
This problem is typically solved by measuring a difference in position and/or orientation of the VR device between the start of the rendering and the completion of the rendering, and the delay is compensated for by adding a quick additional render pass that changes the viewpoint of the virtual camera according to the delay.

### Summary

In contrast with a VR device, an AR device uses live content that is registered to the AR device and an additional significant delay can exist between the moment of registering the live content and the start of rendering. This delayed update of the content may cause a nausea-inducing effect to the user, and is not taken into account in prior art VR devices.

The object of embodiments of the invention is to provide an image processing device, more in particular an augmented reality device which is adapted to be carried by a user and which reduces the risk of causing nausea-inducing effects to the user. Embodiments of the invention aim to provide an image processing device, more in particular an augmented reality device and image processing method with a reduced risk of causing nausea-inducing effects to a user.

According to a first aspect of the invention there is provided an image processing device adapted for being carried by a user, comprising:
- a camera unit configured for capturing an image feed of a scene of an environment wherein the user is located;
- a sensor unit configured for obtaining sensor data, which is representative for an orientation of the image processing device when the camera unit captures the image feed;
- a first estimating unit configured for estimating a position and direction of the camera unit within the environment at a first moment in time, based on at least a first captured image of the scene which is captured at said first moment in time;
- a rendering unit configured for rendering a virtual object at a second moment in time, after the first moment in time;
- a second estimating unit configured for estimating a position and direction of the camera unit within the environment at the second moment in time, based on at least the estimated position and direction of the camera unit at the first moment in time and sensor data obtained by the sensor unit at the first and second moments in time, wherein the rendering unit is configured for rendering the virtual object at the second moment in time based on the estimated position and direction of the camera unit at the second moment in time; and
- a display unit configured for displaying the rendered virtual object in registration with the captured image feed.

Embodiments of the invention are based *inter alia* on the insight that by estimating a position and direction of the camera unit within the environment at the second moment in time, and rendering at the second moment in time a virtual object, based on the estimated position and direction of the camera unit at the second moment in time, a difference between the position and/or orientation of the camera unit at the first moment in time and the position and/or orientation of the camera unit at the second moment in time when a virtual object is to be rendered, can be compensated. Because estimating the position and direction of the camera unit at the second moment in time is based on the estimated position and direction of the camera unit at the first moment in time and sensor data obtained at the first and second moments in time, it is possible to quickly provide an estimate on the position and direction of the camera unit at the second moment in time. Estimating the position and direction of the camera unit at the second moment in time based on a captured image of the scene which is captured at the second moment in time would take to long due to the required image processing that is required, and would result in yet another delay to be introduced. However, sensor data obtained by the sensor unit can be processed more quickly and in combination with the estimated position and direction of the camera unit at the first moment in time, may lead to a quick and accurate estimate of the position and direction of the camera unit at the second moment in time. This way, a difference between the direction and orientation of the camera unit at the first moment in time and the second moment in time when a virtual object is to be rendered is taken into account, and the display unit can display the rendered virtual object in registration with the captured image feed, with a reduced risk of causing nausea-inducing effects to a user of the image processing device. It is clear to the skilled person that the described image processing device can be used in both augmented reality and virtual reality applications.

According to an embodiment, the first estimating unit is configured for estimating camera parameters of the camera unit based on at least the captured image of the scene at the first moment in time, wherein the camera parameters are representative for at least one of a focal length, aspect ratio, resolution and field of view of the camera unit; and the rendering unit is configured for rendering the virtual object at the second moment in time based on the estimated camera parameters.

By estimating camera parameters based on the captured image of the scene at the first moment in time, more data and information is available to the rendering unit in order to render the virtual object. Camera parameters such as focal length, aspect ratio, resolution and/or field of view may contribute to a more accurate rendering of the virtual object at the second moment in time.

According to an embodiment, the image processing device comprises a rendering updating unit configured for updating the rendered virtual object at a third moment in time before the rendered virtual object is displayed, wherein the updating is based on sensor data obtained at the third moment in time.

Typically there may exist a delay between the start of rendering the virtual object at the second moment in time and the completion of rendering the virtual object at a third moment in time. By obtaining sensor data at the third moment in time, the rendered virtual object may be updated accordingly to compensate for a change in orientation and/or position of the camera unit that may have occurred during the rendering process. In augmented reality applications, the delay between the start and completion of the rendering is typically relatively small as compared to the delay between the first moment in time when an image is captured and the second moment in time when the rendering unit starts rendering, because virtual objects to be rendered in augmented reality applications are typically not very complex.

According to an embodiment, the rendering unit is configured for outputting the rendered virtual object as an object in 2D or 2D + Z.

By restricting the rendered virtual object to 2D or 2D+Z (2D with associated depth), a rendering update or compensation step can be performed more quickly as compared a full 3D rendered virtual object because computation requirements are lower. In other words, restricting the rendered virtual object to 2D or 2D+Z enables a low-latency rendering of the virtual object.

According to an embodiment, the first estimating unit is configured for estimating the position and direction of the camera unit within the environment based on detecting at least a predefined marker, template or pattern in the scene.

The predefined marker, template or pattern in the scene allows for the estimating unit to estimate the position and direction of the camera unit within the environment or, in other words, enables a registration to be carried out on how the virtual content should be placed onto the image feed. For example, registration can be carried out by using markers. These markers are placed in the real word environment to indicate where the virtual object should be placed. These markers can be pre-fabricated patterns which are explicitly placed in the scene. However, these markers can also be existing visual elements which are present in the environment, such as a poster on a wall. It is clear to the skilled person that other known ways of performing a registration, such as marker-less registration can also be applied to determine how the virtual object should be placed onto the captured image feed.

According to an embodiment, the rendering unit is configured for rendering the virtual object based on a 3D model and for reducing the 3D model based on a difference between the sensor data obtained at the first moment in time and the sensor data obtained at the second moment in time.

In stead of only compensating for the occurring delays by updating estimates on the position and direction of the camera unit, it is possible to reduce a 3D model of the to be rendered virtual object based on a difference between sensor data obtained at the first moment in time and sensor data obtained at the second moment of time. Based on the difference in sensor data, it can for example be determined that a user with an AR HMD has turned is head to such a degree, that certain views or aspects of the 3D model are no longer relevant for that particular situation. By accordingly reducing the 3D model, a rendering step can be performed more quickly and other resources within the device can be optimized based on the reduced 3D model.

According to an embodiment, the rendering unit is configured for reducing the captured image feed, based on a difference between the sensor data obtained at the first moment in time and the sensor data obtained at the second moment in time. The captured image feed can be reduced in various ways. For example, a captured 3D image feed may be reduced to a 2D image feed, or alternatively the captured feed can be reduced according to estimated range of motion at each point in time. When, for example, the live feed is captured with a larger-than-display field of view, the "extra" of "superfluous" field of view can be reduced when approaching the final rendering stage. Based on the difference in sensor data obtained at the first moment in time and the sensor data obtained at the second moment in time, a suspected maximal range of motion of the user or the image processing device may be estimated. Based on the estimated range of motion, information in the captured live feed may become superfluous for the rendering process. By reducing the captured image feed, a rendering step can be performed more quickly and other resources within the device can be optimized based on the reduced image feed.

According to an embodiment, the image processing device comprises mounting means for being mounted on the body of the user and more in particular for being mounted on the head of the user.

The skilled person will understand that the hereinabove described technical considerations and advantages for device embodiments also apply to the below described corresponding method embodiments, *mutatis mutandis.*

According to a second aspect of the invention there is provided an image processing method, more in particular an augmented reality method for rendering a virtual object in registration with an image feed captured by a camera, in an image processing device, in particular an augmented reality device carried by a user, the method comprising:
- estimating a position and direction of the camera within an environment at a first moment in time, based on at least a first captured image of a scene of said environment which is captured at said first moment in time;
- rendering a virtual object at a second moment in time, after the first moment in time;
- estimating a position and direction of the camera within the environment at the second moment in time, based on at least the estimated position and direction of the camera at the first moment in time and on sensor data, which is representative for an orientation of the image processing device and which is obtained at the first and second moments in time; and
- rendering the virtual object at the second moment in time based on the estimated position and direction of the camera at the second moment in time.

According to an embodiment, the image processing method comprises the steps of:
- estimating camera parameters of the camera based on at least the captured image of the scene at the first moment in time, wherein the camera parameters are representative for at least one of a focal length, aspect ratio, resolution and field of view of the camera; and
- rendering the virtual object at the second moment in time based on the estimated camera parameters.

According to an embodiment, the image processing method comprises updating the rendered virtual object at a third moment in time before the rendered virtual object is displayed, wherein the updating is based on sensor data obtained at the third moment in time.

According to an embodiment, the rendering comprises outputting the rendered virtual object as an object in 2D or 2D + Z.

According to an embodiment, estimating the position and direction of the camera unit within the environment comprises detecting at least a predefined marker, template or pattern in the scene.

According to an embodiment, rendering the virtual object is based on a 3D model and the image processing method comprises reducing the 3D model based on a difference between the sensor data obtained at the first moment in time and the sensor data obtained at the second moment in time.

According to an embodiment, the image processing method comprises reducing the captured image feed, based on a difference between the sensor data obtained at the first moment in time and the sensor data obtained at the second moment in time.

According to an embodiment, the image processing method is performed when the image processing device is mounted on the body of the user, and more in particular on the head of the user.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically an exemplary embodiment of an image processing device, more in particular an augmented reality device according to the invention;
Figure 2 illustrates schematically a further embodiment of an image processing device according to the invention;
Figure 3 is a flowchart illustrating an exemplary embodiment of an image processing method, more in particular an augmented reality method according to the invention;
Figure 4 is a flowchart illustrating a further embodiment of an image processing method according to the invention; and
Figure 5 illustrates schematically how an embodiment of the image processing method according to the invention can be applied to an image processing device, more in particular to an HMD which can be used as an augmented reality device or a virtual reality device.

### Description of embodiments

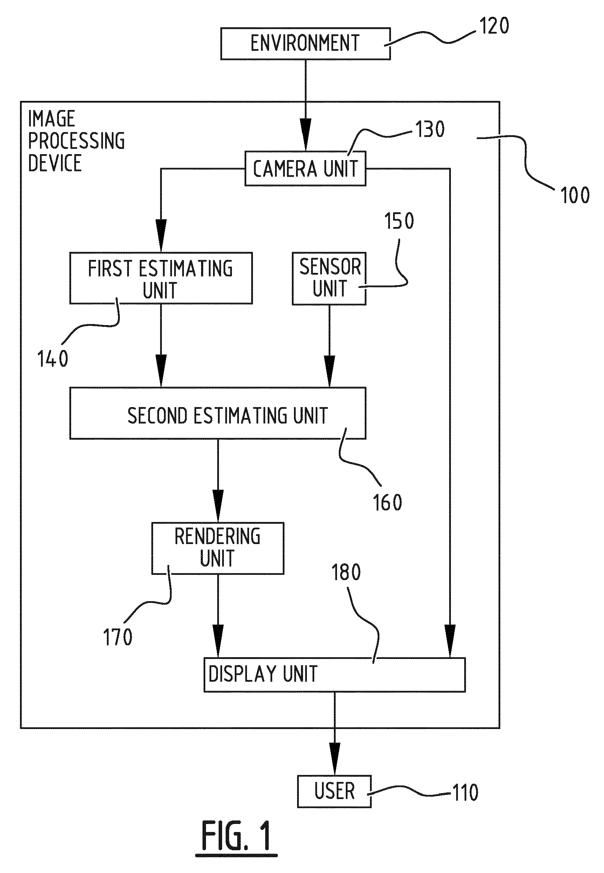

Figure 1 illustrates an image processing device 100 adapted for being carried by a user 110. The term "adapted for being carried by a user" should be interpreted broadly. The device may for example be a handheld device such as a smartphone, tablet computer or a handheld gaming console, or the device may be carried by the user on another body part, for example the device may be a head mounted display and be carried on the head of the user. The image processing device 100 comprises a camera unit 130 configured for capturing an image feed of a scene of an environment 120 wherein the user 110 is located. The image feed may comprise a plurality of images which are subsequently captured by the camera unit 130. The scene of the environment 120 of which the image feed is captured may be a part of the environment which is within the field of view of the camera unit 130, for example, when the image processing device is a HMD, the scene may correspond with a part of the environment 120 as seen from a viewpoint of the user 110. Although the user 110 is illustrated as being separated from the environment 120, this is merely to illustrate the flow of information and interconnections in the image processing device 100, which starts with capturing an image feed of a scene of the environment 120 and ends with the display unit 180, displaying a rendered virtual object in registration with the captured image feed for the user 110 to see. The image processing device 100 comprises a sensor unit 150 configured for obtaining sensor data, which is representative for an orientation of the image processing device when the camera unit 130 captures the image feed. The sensor unit 150 may comprise sensors for measuring or detecting a rotation and/or translation of the image processing device. In addition to the sensor data, metadata with regard to the camera unit 130 capturing the image feed may be obtained and/or saved, such as for example a zoom factor of the camera unit 130 when capturing the image feed.

The image processing device 100 comprises a first estimating unit 140 configured for estimating a position and direction of the camera unit 130 within the environment 120 at a first moment in time, based on at least a first captured image of the scene which is captured at said first moment in time. By estimating the position and direction of the camera unit 130 within the environment 120, it can be registered how virtual content should be placed onto the captured image feed. When rendering 3D content for example, the place of the virtual camera has to be estimated accurately in order to combine the rendered 3D content with the real content captured by the camera unit 130. In a preferred embodiment of the image processing device 100, registration of how the virtual content is to be placed onto the captured image feed and estimation of the position and direction of the camera unit 130 within the environment 120 is based on detecting at least a predefined marker, template or pattern in the scene. When markers are used, these markers are placed in the real world environment to indicate where the virtual object should be placed. These markers can be pre-fabricated patterns which are explicitly placed in the scene. However, these markers can also be existing visual elements which are present in the environment, such as a poster on a wall. It is clear to the skilled person that other known ways of performing a registration, such as marker-less registration can also be applied to determine how the virtual object should be placed onto the captured image feed.

The image processing device 100 comprises a rendering unit 170 configured for rendering a virtual object at a second moment in time, after the first moment in time. The virtual object may be based on an offline 3D model. It is clear to the skilled person that multiple virtual objects may be rendered by the rendering unit 170. However, when the rendering unit 170 starts rendering at the second moment in time, typically the user 110 and thereby the image processing device 100 carried by the user 110 may have changed position or orientation within the environment 120, while the rendering unit 170 would start rendering based on information obtained at the first moment in time. This would lead to erroneous and/or delayed rendering, which may cause nausea-inducing effects to the user 110. However, the image processing device 100 comprises a second estimating unit 160 configured for estimating a position and direction of the camera unit 130 within the environment at the second moment in time, based on at least the estimated position and direction of the camera unit at the first moment in time and sensor data obtained by the sensor unit 150 at the first and second moments in time, and the rendering unit 170 is configured for rendering the virtual object at the second moment in time based on the estimated position and direction of the camera unit 130 at the second moment in time. Because sensor data obtained by the sensor unit 150 can be processed more quickly as compared to a captured image, this sensor data in combination with the estimated position and direction of the camera unit 130 at the first moment in time, may lead to a quick and accurate estimate of the position and direction of the camera unit at the second moment in time. This way, a difference between the direction and orientation of the camera unit 130 at the first moment in time and the second moment in time when a virtual object is to be rendered is taken into account and compensated for. The image processing device 100 comprises a display unit 180 configured for displaying the rendered virtual object in registration with the captured image feed. Because of the carried out compensation for the eventual movement of the user 110 and the image processing device 100, the display unit 180 can display the rendered virtual object in registration with the captured image feed, with a reduced risk of causing nausea-inducing effects to the user 110 of the image processing device 100, which can be used as an augmented reality device or a virtual reality device.

In a preferred embodiment of the image processing device 100, the first estimating unit 140 is further configured for estimating camera parameters of the camera unit 130 based on at least the captured image of the scene at the first moment in time. The camera parameters may be representative for at least one of a focal length, aspect ratio, resolution and field of view of the camera unit 130. Based on these camera parameters the rendering unit 170 can provide a more accurately rendered virtual object.

In a further embodiment of the image processing device 100, the rendering unit 170 is configured for rendering the virtual object based on a 3D model, more in particular an offline 3D model which is available to the rendering unit 170. The rendering unit 170 is configured for reducing the 3D model based on a difference between the sensor data obtained at the first moment in time and the sensor data obtained at the second moment in time. Based on the difference in sensor data, it can for example be determined that a user 110 with an AR HMD 100 has turned is head to such a degree, that certain views or aspects of the 3D model are no longer relevant for that particular situation. By accordingly reducing the 3D model, a rendering step can be performed more quickly and other resources within the device can be optimized based on the reduced 3D model.

The image processing device 100 preferably comprises mounting means (not shown) for being mounted on the body of the user and more in particular for being mounted on the head of the user. The image processing device can for instance be a dedicated HMD, or a smartphone or tablet computer which are for example placed in a HMD holder.

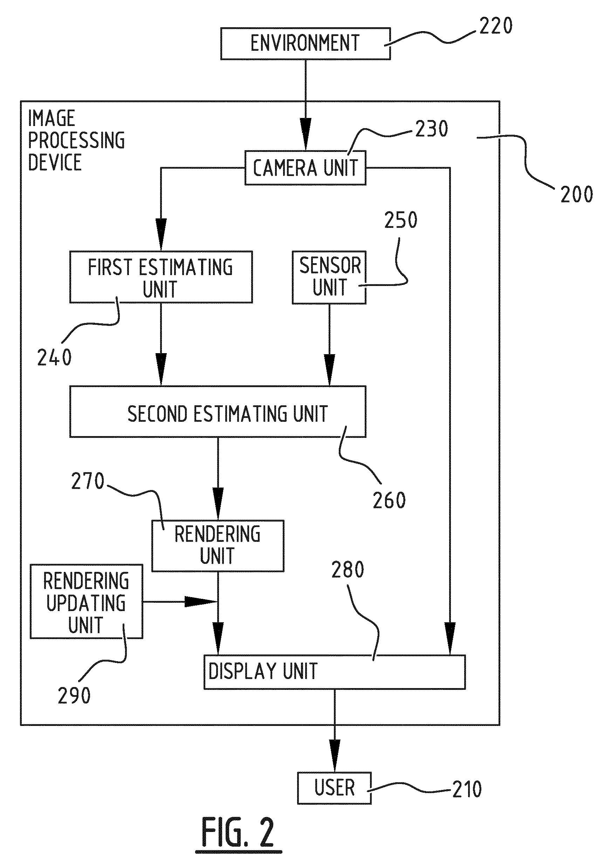

Figure 2 illustrates an image processing device 200, which differs from the image processing device 100 of Figure 1 in that it comprises a rendering updating unit 290 configured for updating the rendered virtual object at a third moment in time before the rendered virtual object is displayed, wherein the updating is based on sensor data obtained at the third moment in time. Preferably, the rendering unit is configured for outputting the rendered virtual object as an object in 2D or 2D + Z. An updating step or compensation step can be done in a quick additional render pass performed by the rendering updating unit 290, which changes the virtual viewpoint according to the change in position or orientation of the user 210 and the image processing device 200 that might have occurred during the rendering process of the rendering unit 270, or in other words the change in position or orientation of the user 210 and the image processing device 200 that might have occurred between the second moment in time and the third moment in time. The model on which this additional pass is done may be restricted to 2D or 2D+Z. This way, the additional pass can be done as quickly as possible. Typically the rendered virtual object that is output by the rendering unit 270 corresponds with the viewpoint of the user 210 at the second moment in time. Whereas, by quickly updating the rendered virtual object based on sensor data obtained at the third moment in time, the updated rendered virtual object corresponds with a viewpoint of the user 210 at the third moment in time. In order for the rendering updating unit 290 to perform a low-latency rendering update, the input to the rendering updating unit 290 is a simplified model which is output by the rendering unit 270, such as preferably a 2D image, optionally with an associated depth (2D+Z).

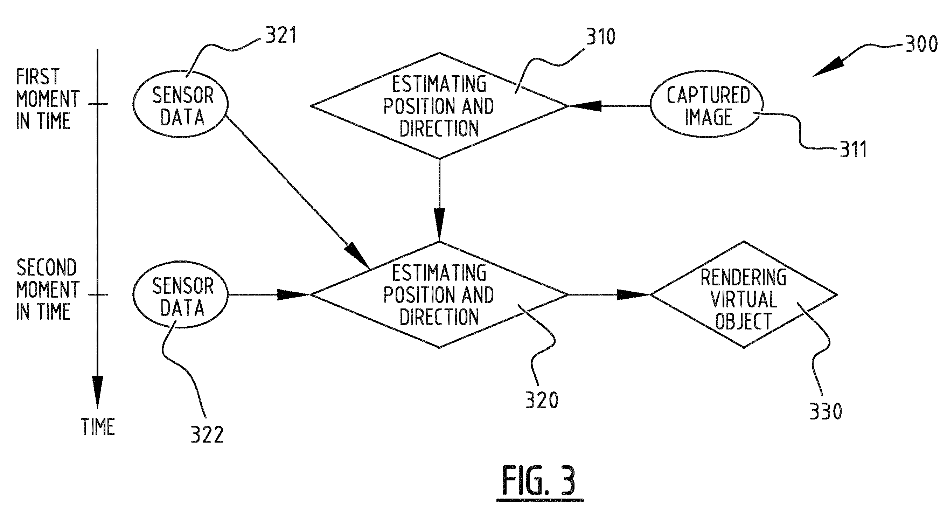

Figure 3 is a flowchart of an image processing method 300 for rendering a virtual object in registration with an image feed captured by a camera, in an image processing device carried by a user, the method comprising following steps:
- step 310 of estimating a position and direction of the camera within an environment at a first moment in time, based on at least a first captured image 311 of a scene of said environment which is captured at said first moment in time;
- step 330 of rendering a virtual object at a second moment in time, after the first moment in time;
- step 320 of estimating a position and direction of the camera within the environment at the second moment in time, based on at least the estimated position and direction of the camera at the first moment in time and on sensor data 321, 322, which is representative for an orientation of the image processing device and which is obtained at the first and second moments in time; and
- wherein step 330 of rendering the virtual object at the second moment in time is based on the estimated position and direction of the camera at the second moment in time.

Next to the flowchart in Figure 3 a time axis is illustrated to visually indicate which steps are performed at which moment in time, and to show which data is to be used in these steps and when this data may be obtained.

Preferably, the image processing method comprises a step of estimating camera parameters of the camera based on at least the captured image of the scene at the first moment in time, wherein the camera parameters are representative for at least one of a focal length, aspect ratio, resolution and field of view of the camera. In addition to being based on the estimated position and direction of the camera at the second moment in time, rendering the virtual object at the second moment in time may be based on the estimated camera parameters, which may provide for a more accurately rendered virtual object.

The steps 310 and 320 of estimating the position and direction of the camera unit within the environment may comprise detecting at least a predefined marker, template or pattern in the scene. When markers are used, these markers are placed in the real word environment to indicate where the virtual object should be placed. These markers can be pre-fabricated patterns which are explicitly placed in the scene. However, these markers can also be existing visual elements which are present in the environment, such as a poster on a wall. It is clear to the skilled person that other known ways of performing a registration, such as marker-less registration can also be applied to determine how the virtual object should be placed onto the captured image feed.

Step 330 of rendering the virtual object is preferably based on a 3D model and the method 300 may advantageously comprise reducing the 3D model based on a difference between the sensor data obtained at the first moment in time 321 and the sensor data obtained at the second moment in time 322. In addition to compensating for the occurring delays by updating estimates on the position and direction of the camera unit, it is possible to reduce a 3D model of the to be rendered virtual object based on a difference between sensor data obtained at the first moment in time 321 and sensor data obtained at the second moment of time 322. Based on the difference in sensor data, it can for example be determined that a user with an AR HMD has turned is head to such a degree, that certain views or aspects of the 3D model are no longer relevant for that particular situation. By accordingly reducing the 3D model, a rendering step 330 can be performed more quickly. In another exemplary embodiment the captured live feed also needs to be rendered and the captured feed can be reduced according to the estimated motion range at each point in time. When, for example, the live feed is captured with a larger-than-display field of view, the "extra" or "superfluous" field of view can be reduced when approaching the final rendering stage.

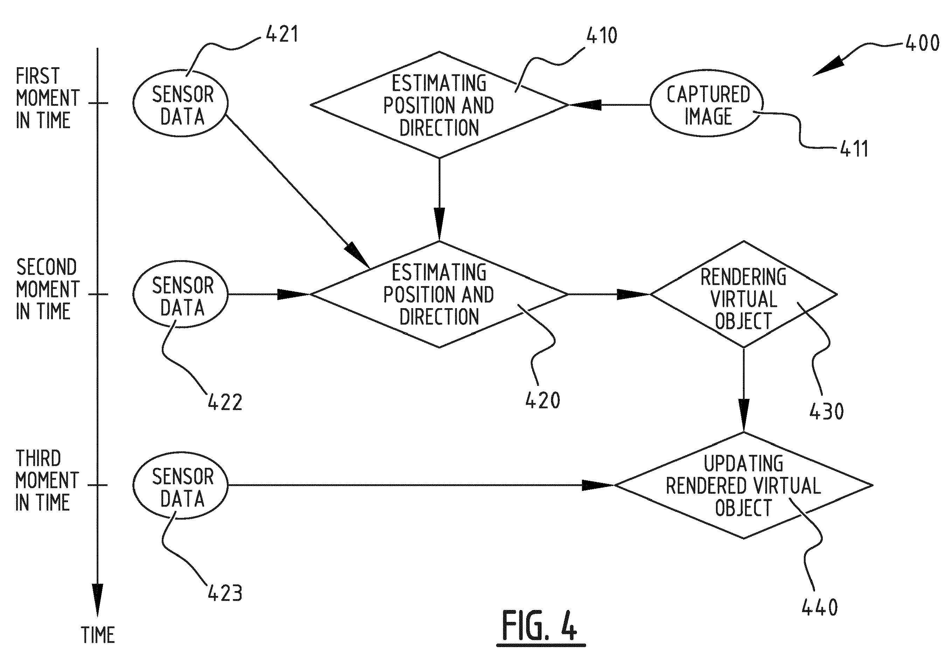

Figure 4 illustrates an image processing method 400, which is different from the method of Figure 3 in that it comprises a step 440 of updating the rendered virtual object at a third moment in time. The updating 440 is preferably based on sensor data 423 which is obtained at the third moment in time. Step 430 of rendering the virtual object preferably comprises outputting the rendered virtual object as an object in 2D or 2D + Z.

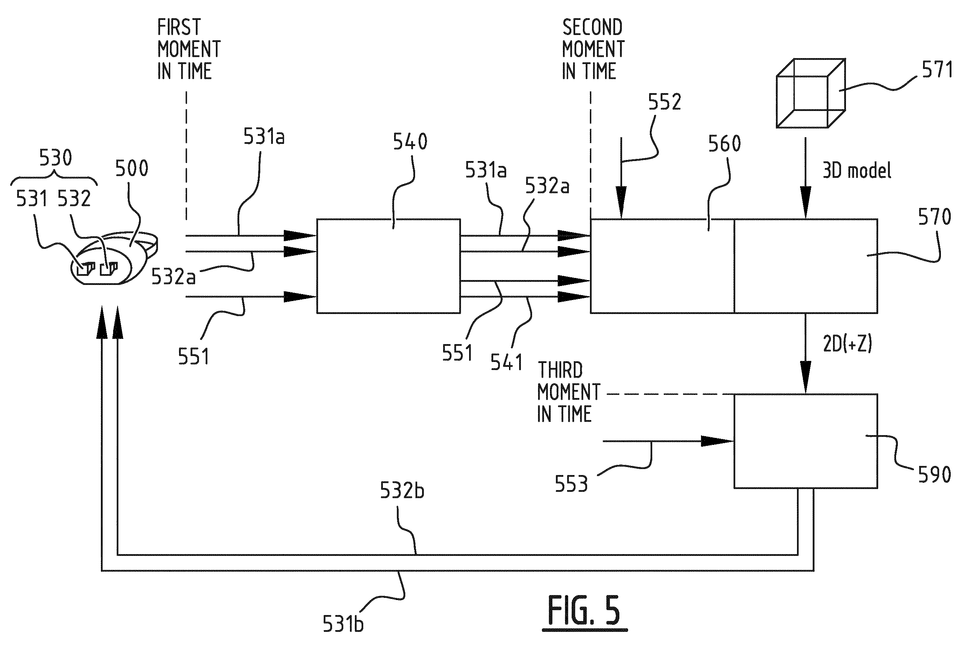

Referring to Figure 5, it is illustrated that a camera unit 530 can be added to an HMD 500 to create an augmented reality or virtual reality experience. The camera unit 530 may comprise two cameras 531, 532 for stereo vision, which capture the images in front of the user, then virtual content 571 can be added and merged content (real and virtual) can be displayed to the user via the HMD 500. First two camera feeds 531a, 532a are captured for stereo vision. Sensor data 551 or HMD metadata 551, such as data on a rotation R, translation T, and/or zoom can be added to the captured image feed 531a, 532a. A sensor unit for obtaining sensor data 551 or HMD metadata 551 is not explicitly shown in Figure 5, but it is clear to the skilled person that the HMD 500 can be equipped witch such a sensor unit. Figure 5 shows that sensor data and/or metadata 551 is sent as an out-of-band signal, however this is only for illustrative purposes. It is clear for the skilled person that the sensor data and/or metadata 551 can be delivered both in-band or out-of-band. The images of the image feed 531a, 532a are captured and HMD sensor data 551 and/or metadata 551 is obtained at a first moment in time.

Consequently a position and direction of the two cameras 531, 532 can be estimated in a first estimating unit 540. In other words, the first estimating unit is configured to "register" how the virtual content 571 should be placed onto the image feed 531a, 532a captured by the cameras 531, 532. Actual camera positions of the cameras 531, 532 with regards to the environment can be recovered or estimated by the first estimating unit 540. This is needed because, when rendering a 3D object, it is useful to know where to place the virtual camera in order for the rendered content to be correctly combined with the real content. A simple way of doing this registration is by using so-called markers. These are patterns that are placed in the real world to indicate where you want the virtual content to be placed. These patterns can be automatically recognized in the camera images, and the camera position can be estimated. These patterns can be pre-fabricated and explicitly placed in the scene, however it is also possible to use existing visual elements such as a poster on the wall as a marker. It is clear to the skilled person that there are alternative ways to estimate the position and direction of the cameras 531, 532. For example, when the HMD 500 comprises a depth sensor, a so-called registration or estimation of the position and direction of the cameras 531, 532 can be performed based on a geometric registration. In other words, the scene can be mapped in 3D by the HMD 500, and based on this 3D information a current position and/or direction of the HMD and thus the cameras 531, 532 can be determined.

During the step of estimating the position and direction of the two cameras 531, 532 or the so-called registration step performed by the first estimating unit 540, typically two matrices are generated: a matrix P which represents the projection matrix, which typically conveys the intrinsic parameters of the camera such as the focal length and aspect ratio, and a matrix M, which represents the modelview matrix, which represents the translation and rotation of the camera 531, 532. These are the matrices which are used to render the 3D virtual object if nothing else is done to compensate for the change in rotation and/or orientation of the HMD 500 that might have occurred between the first moment in time and the second moment in time. Note however that these matrices P and M only represent the position and direction of the cameras 531, 532 or the state of the HMD 500 at the first moment in time. The matrices P and M, which are obtained at the first moment in time are represented by reference number 541, and are illustrated as data flowing from the first estimating unit 540 to the second estimating unit 560, along with the HMD sensor data and/or metadata 551.

Typically in prior art approaches, the 3D model would be rendered based on the matrices [PIM] and the render would be positioned on top of the captured 2D image. However, assuming we are at a second moment in time at the start of the rendering unit 570, the HMD sensor data and/or HMD metadata 552, for example regarding the position of the HMD 500 is only now obtained and taken into account when the viewpoint update, after the rendering unit 570 has finished at a third moment in time. It is typical however that the delay between the first moment in time and the second moment in time is much higher than between the second moment in time and the third moment in time. This is due to the relative simplicity of rendering single objects that are used for typical augmented reality applications. The time between the first moment in time and the third moment in time may approximately be 80ms, whereas the time between the second moment in time and the third moment in time typically is only a few milliseconds.

To cope with the time difference between the first moment in time and the second moment in time, and the eventual movement of the HMD that has occurred in the meanwhile, a compensation step is added that alters or updates the rendering matrices P and M 541 to reflect the change in HMD rotation and/or orientation that has occurred between the first moment in time and the second moment in time. Based on sensor data 551 obtained at the first moment in time, sensor data obtained at the second moment in time 552, the second estimating unit 560 can estimate the position and direction of the cameras 531, 532 at the second moment in time. In other words, based on sensor data 551 obtained at the first moment in time, sensor data obtained at the second moment in time 552, the matrix M 541, which is representative for the translation and rotation of the camera 531, 532 at the first moment in time, can be updated in order to be representative for the translation and rotation of the camera 531, 532 at the second moment in time. The updated matrices M can then be used by the rendering unit 570.

This matrix compensation or matrix update will now be illustrated for an exemplary case where only the rotation is available from the HMD 500. Illustratively, the known quaternion representation for rotations is used, however it is clear for the skilled person that other representations can be used in a similar way.

A basic projection can be represented as: x = P * M * X, with x the 2D projection of 3D point X, M the modelview matrix and P the projection matrix.

Let R₀ be the quaternion that represents the rotation of the HMD 500 at the first moment in time and R₁ be the quaternion that represents the rotation at the second moment in time. The rotation difference is then: R_{diff} = R₂ * R₁⁻¹. It is noted that the inverse can be replaced by the conjugate due to the norm being 1. Now a compatible matrix representation M_{diff} can be constructed, M can be left-multiplied by M_{diff} to get the new compensated matrix M': M' = M_{diff} * M.

This compensation will make sure the registered position is in-line with the current HMD state regarding position and/or rotation of the HMD 500.

In this exemplary embodiment, only the matrix M was compensated for the delay between the first and second moment in time. However it is clear to the skilled person that when matrix P represents parameters of the camera that may change in time, such as a field of view or autofocus factor, a similar approach can be used to update the matrix P. In an alternative embodiment, it is useful to also compensate the content, such as for example 2D video streams, 2D+Z streams, 3D models, etc.. In the case where each compensation step takes us closer to the actual viewpoint, the potential movement decreases with a decreasing delay. In another embodiment, it is useful to reduce the 3D model information along the processing path, for example when there are restrictions or limitations regarding memory, bandwidth and/or processing power. Employing the proposed method, one can reduce the information in a spatially-aware fashion by assessing the potential delay and expected motion at each step in the processing chain. In this case, the compensation step does not only modify the matrices but also reduces the 3D models because the potential movement, and thus potential viewpoint "range" for rendering, is getting smaller along the processing path. This proposed approach thus not only significantly reduces delay, but also offers the ability to optimize other resources due to the embedded knowledge and compensation.

In the exemplary embodiment of Figure 5, the rendering unit 570 is configured for outputting the rendered virtual object 571 as an object in 2D + Z. An updating step or compensation step is then done in a quick additional render pass performed by the rendering updating unit 590, which changes the virtual viewpoint according to the change in position or orientation of the user and the HMD 500 that might have occurred during the rendering process of the rendering unit 570, or in other words the change in position or orientation of the user and the HMD 500 that might have occurred between the second moment in time and the third moment in time. The model on which this additional pass is done may be restricted to 2D or 2D+Z. This way, the additional pass can be done as quickly as possible. Typically the rendered virtual object that is output by the rendering unit 570 corresponds with the viewpoint of the user at the second moment in time. Whereas, by quickly updating the rendered virtual object based on sensor data 553 obtained at the third moment in time, the updated rendered virtual object corresponds with a viewpoint of the user at the third moment in time. In order for the rendering updating unit 590 to perform a low-latency rendering update, the input to the rendering updating unit 590 is a simplified model which is output by the rendering unit 570, such as preferably a 2D image, optionally with an associated depth (2D+Z). Finally, the updated render of the 3D model can be displayed in registration with the image feed 531b, 532b captured by the cameras 531, 532 at the third moment in time.

Different embodiments of an image processing device and image processing method have been described, which allow for a significant reduction in delay when using live captured information that is relative to an HMD. The described embodiments can compensate for the end-to-end delay. In practice, this means that a delay of approximately 70 ms when a user rotates his or her head is reduced to a delay of a few milliseconds.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. An image processing device adapted for being carried by a user, comprising:
- a camera unit configured for capturing an image feed of a scene of an environment wherein the user is located;
- a sensor unit configured for obtaining sensor data, which is representative for an orientation of the image processing device when the camera unit captures the image feed;
- a first estimating unit configured for estimating a position and direction of the camera unit within the environment at a first moment in time, based on at least a first captured image of the scene which is captured at said first moment in time;
- a rendering unit configured for rendering a virtual object at a second moment in time, after the first moment in time;
- a second estimating unit configured for estimating a position and direction of the camera unit within the environment at the second moment in time, based on at least the estimated position and direction of the camera unit at the first moment in time and sensor data obtained by the sensor unit at the first and second moments in time, wherein the rendering unit is configured for rendering the virtual object at the second moment in time based on the estimated position and direction of the camera unit at the second moment in time; and
- a display unit configured for displaying the rendered virtual object in registration with the captured image feed.

2. The image processing device according to claim 1, wherein
- the first estimating unit is configured for estimating camera parameters of the camera unit based on at least the captured image of the scene at the first moment in time, wherein the camera parameters are representative for at least one of a focal length, aspect ratio, resolution and field of view of the camera unit; and
- the rendering unit is configured for rendering the virtual object at the second moment in time based on the estimated camera parameters.

3. The image processing device according to claim 1 or 2, comprising:
- a rendering updating unit configured for updating the rendered virtual object at a third moment in time before the rendered virtual object is displayed, wherein the updating is based on sensor data obtained at the third moment in time.

4. The image processing device according to claim 3, wherein the rendering unit is configured for outputting the rendered virtual object as an object in 2D or 2D + Z.

5. The image processing device according to any one of the preceding claims, wherein the first estimating unit is configured for estimating the position and direction of the camera unit within the environment based on detecting at least a predefined marker, template or pattern in the scene.

6. The image processing device according to any one of the preceding claims, wherein the rendering unit is configured for rendering the virtual object based on a 3D model and for reducing the 3D model based on a difference between the sensor data obtained at the first moment in time and the sensor data obtained at the second moment in time.

7. The image processing device according to any one of the preceding claims, wherein the rendering unit is configured for reducing the captured image feed, based on a difference between the sensor data obtained at the first moment in time and the sensor data obtained at the second moment in time.

8. The image processing device according to any one of the preceding claims, wherein the image processing device comprises mounting means for being mounted on the body of the user and more in particular for being mounted on the head of the user.

9. An image processing method for rendering a virtual object in registration with an image feed captured by a camera, in an image processing device carried by a user, the method comprising:
- estimating a position and direction of the camera within an environment at a first moment in time, based on at least a first captured image of a scene of said environment which is captured at said first moment in time;
- rendering a virtual object at a second moment in time, after the first moment in time;
- estimating a position and direction of the camera within the environment at the second moment in time, based on at least the estimated position and direction of the camera at the first moment in time and on sensor data, which is representative for an orientation of the image processing device and which is obtained at the first and second moments in time; and
- rendering the virtual object at the second moment in time based on the estimated position and direction of the camera at the second moment in time.

10. The image processing method according to claim 9, comprising
- estimating camera parameters of the camera based on at least the captured image of the scene at the first moment in time, wherein the camera parameters are representative for at least one of a focal length, aspect ratio, resolution and field of view of the camera; and
- rendering the virtual object at the second moment in time based on the estimated camera parameters.

11. The image processing method according to claim 9 or 10, comprising:
- updating the rendered virtual object at a third moment in time, wherein the updating is based on sensor data obtained at the third moment in time.

12. The image processing method according to claim 11, wherein the rendering comprises outputting the rendered virtual object as an object in 2D or 2D + Z.

13. The image processing method according to any one of the preceding claims 9 to 12, wherein estimating the position and direction of the camera unit within the environment comprises detecting at least a predefined marker, template or pattern in the scene.

14. The image processing method according to any one of the preceding claims 9 to 13, wherein rendering the virtual object is based on a 3D model and the method comprises reducing the 3D model based on a difference between the sensor data obtained at the first moment in time and the sensor data obtained at the second moment in time.

15. A computer program product comprising computer-executable instructions for performing the method of any one of the claims 9-14, when the program is run on a computer.
